# EUROPEAN PATENT SPECIFICATION

(11) **EP 0 877 052 B1**
(45) Date of publication and mention of the grant of the patent: **03.03.2004**
(21) Application number: 98107905.6
(22) Date of filing: 30.04.1998
(51) Int. Cl.: C08L 23/10, C08L 23/16, C08L 91/00

(54) **Composite plasto-elastic polymeric products**
Thermoplastische Elastomer-Kompositartikel
Articles compositis élastomères thermoplastiques

(30) Priority: 05.05.1997 IT MI971038
(43) Date of publication of application: 11.11.1998
(73) Proprietor: Quattrogierre S.r.l., 20052 Monza, Milan (IT)
(72) Inventor: Lesca, Giuseppe, 20121 Milano (IT); Di Drusco, Giovanni, 44100 Ferrara (IT)
(74) Representative: Gervasi, Gemma, Dr.

(56) References cited:
- EP-A- 0 143 131
- EP-A- 0 564 961
- EP-A- 0 593 859
- EP-A- 0 818 504
- HAN S J ET AL: "THERMOPLASTIC VULCANIZATES FROM ISOTACTIC POLYPROPYLENE AND ETHYLENE-PROPYLENE-DIENE TERPOLYMER IN SUPERCRIDTICAL PROPANE: SYNTHESIS AND MORPHOLOGY" MACROMOLECULES, vol. 31, no. 16, 11 August 1998, pages 5407-5414, XP000771992

## Description

### Scope of invention

The present invention regards the field of composite polymeric materials. Described herein are materials containing crystalline polymers, amorphous polymers and oil, having high levels of weldability, and products for insulation/waterproofing manufactured using the said materials.

### State of the art

Polymer products are used in a wide range of applications. According to the particular application, it is important to have available materials with a wide range of different physical characteristics, e.g., rigidity, thermoplasticity, resistance to certain environmental agents.

Materials that combine good mechanical properties and good elastic properties have been obtained starting from polymers of crystalline nature, used in mixtures with amorphous polymers.

An example of these are materials consisting of isotactic propylene and ethylene-propylene rubbers. The said products are exploited for all applications that during use must present characteristics of resilience at low temperatures.

In a number of technical sectors, among which the sector of waterproofing of buildings, the problem is felt of having available covering polymeric materials that present good weldability, sufficient elasticity and, at the same time, a high mechanical strength.

Generally, to obtain this result it is necessary to lower the melting temperature of the polymers, so as to perform welding at a low temperature, thus avoiding subjecting the material to thermal treatments that might impair its mechanical characteristics.

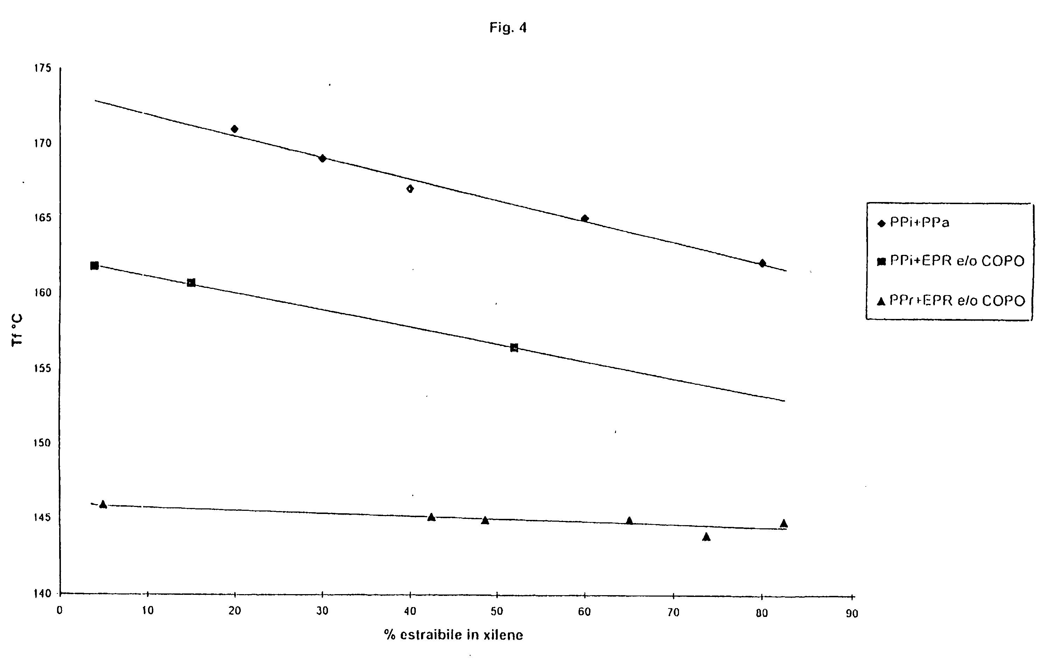

In Polymer Handbook, I. Brandrup and E.H. Immergut, Ed. 3, V Page 29, it is shown how the melting point of isotactic (crystalline) polypropylene drops if part of the isotactic polypropylene is replaced with atactic (amorphous) polypropylene (see Fig. 4).

However, the reduction of the melting point does not of itself guarantee a high level of weldability. Welds made with low-melting materials are easy to obtain, but just as easy to dissociate. Obtaining good weldability of the materials does not depend only upon their rheological characteristics, prevalently related to the melting point, but also and above all upon the capacity of the materials in the molten state to inter-mix, and upon their capacity to form, at the moment of cooling, a homogeneous and resistant joint. The latter property appears to depend upon the modes of aggregation of the crystalline and amorphous phases within the material in question.

In Polym. Eng. Sci., 1996, 36(11), 1547-1556 it is reported that mixtures of isotactic polypropylene with oil and polystyrene block-polymers present a drop in the melting point. On the other hand, according to the same authors, mixtures of isotactic polypropylene with oil and ethylene-propylene polymers do not present any reduction in the melting point. No mention is made of the weldability of these materials.

Substantially, in the state of the art no indication is found as regards the possibility of obtaining composite polymeric materials, in particular crystalline propylene-based materials, having low-temperature weldability, and hence practically unaltered mechanical and chemico-physical characteristics.

In the light of the state of the art described above, the present invention tackles the problem of obtaining composite polymeric materials having low melting point, good mechanical characteristics and high weldability.

### Summary

The invention regards a polymeric material with a high level of weldability at a low temperature and high mechanical characteristics, containing:
a. one or more polymers of a crystalline nature chosen from among isotactic polypropylene, random polypropylene and their mixtures;
b. one or more amorphous polymers chosen from among an ethylene-propylene copolymer (EPR rubber), a copolymer of propylene with ethylene and/or other alpha-olefins (COPO), a copolymer of ethylene with octene-1 (ENGAGE) and/or other alpha olefins and their mixtures;
c. an oil in which the components b are soluble.

The invention also describes products, in particular sheets, having high levels of weldability at a low temperature and having high mechanical characteristics also in the welding point, suitable for applications in building and civil engineering.

A further aspect of the invention consists in providing an industrially realizable process for producing composite polymeric materials comprising crystalline and amorphous polymers. in particular materials made of crystalline polypropylene and propylene copolymers, which have very high mechanical characteristics and weldable at low temperatures, i.e., lower than the temperatures required to weld the starting polymers.

### Detailed description of the invention

As a solution to the problems referred to above, which have not been solved by the prior art, the applicant describes a composite polymeric material consisting of:
a. one or more polymers of crystalline nature chosen between isotactic polypropylene and random polypropylene;
b. one or more amorphous polymers chosen from among an ethylene-propylene copolymer (EPR rubber), ethylene-propylene-diene terpolymers (EPDM rubber), a copolymer of propylene with ethylene and/or other alpha-olefins (COPO), or a copolymer of ethylene with octene-1 (ENGAGE) and/or other alpha olefins;
c. an oil, in which the components b. are soluble.

The applicant has noted that unexpectedly the melting point of the composite polymeric material containing the components a + b drops considerably following on the addition of an oil (component c) which is a solvent of the amorphous phase b, and that correspondingly the welding temperature of the material drops, albeit enabling excellent weldability, i.e., an excellent capacity of intramixing in the molten state and solidifying with the formation of homogeneous, flexible, and tough joints that are uniform from the mechanical standpoint with the rest of the material.

A further surprising aspect of the present invention consists in combining characteristics of high weldability and resistance in materials having considerable elasticity. In fact, if, on the one hand, the mixture of the components a (plastomers), b (elastomers) and c (oil) used in the scope of the present invention leads to relatively soft materials, these materials present high and uniform mechanical characteristics as shown by the high tensile strength also in the welding points.

As regards the overall weight of the composite polymeric material (a+b+c = 100%), the polymer of crystalline nature (a) is present from 15% to 60%, preferably from 15% to 40%. The crystalline polypropylenes used according to the invention are available on the market. Examples thereof are Moplen S30S (isotactic polypropylene), or Moplen EP2S12B (random polypropylene with ethylene). Table A presents a list of these products and their availability on the market.

The amorphous polymer (b) is present preferably in a proportion of from 5 wt% to 80 wt%, preferably of between 10 wt% and 70 wt%, more preferably of between 20 wt% and 50 wt%.

The amorphous polymers used, chosen from among elastomeric ethylene-propylene copolymer (EPR rubber), ethylene-propylene-diene terpolymers (EPDM rubber) or a copolymer of propylene with ethylene and/or other alpha-olefins (COPO), or a copolymer of ethylene with octene-1 (ENGAGE) and/or other alpha olefins, or their mixtures, are also commercially available (see Table A).

The oil (c) is present in a proportion of between 5 wt% and 60 wt%, preferably of between 15 wt% and 45 wt%, more preferably of between 20 wt% and 40 wt%.

Any oil may be used in the present invention, on the condition that the amorphous polymers used in the composition are soluble in the oil. As an example, the following may be cited: naphthenic oil, paraffin oil, linear dodecylbenzene, mixtures of dialkylbenzenes or diphenylalkanes (see Table A).

In all cases, an oil must be chosen having a boiling point higher than the processing temperature. Preferably, the oil has a boiling point of over 300°C.

According to a particular embodiment of the invention, the crystalline and amorphous phases are at least in part contained in one starting product. Examples of the said starting products are the so-called heterophasic propylene-ethylene copolymers, such as Adflex Q100F (35% random polypropylene and 65% COPO) or Moplen EPT30R (85% isotactic polypropylene and 15% COPO).

In this case, the polymeric material according to the present invention is obtained by adding the oil and possibly a further amount of amorphous and/or crystalline polymer.

Among the fillers, the following may be mentioned: talcum, calcium carbonate, silica, alumina, mica, bentonite, barite. The preferred filler is talcum.

Examples of dyes are PE 99187, PE 41900, PE/F 72020/29020, PE 91532 (Viba).

Among the anti-oxidants mention may be made of BHT, Irganox 1076, Irganox 1010 (Ciba), Anox-PT 311 (Great Lakes), Gudrite 3114, Gudrite 3125 (Goodyear), Cyanox 1790 (Cyanamid).

Examples of UV-protectors are Tinuvin 326, Tinuvin 327 (Ciba), Chimassorb 81 (Sandoz), Cyassorb UV 531 (Cyanamid), Hostavin VPARO6 (Hoechst), and Uvasil 2000 HM (Great Lakes).

The present invention moreover includes insulation/waterproofing products made of the composite polymeric material as described above.

In these products, the fillers are present in a proportion of up to 40 wt%, preferably from 10 wt% to 30 wt% with respect to the total weight of the product. The anti-oxidants, UV-protectors and dyes, taken together, are present on average in a proportion of 1 wt% with respect to the weight of the product.

Specific examples of insulation waterproofing products in accordance with the present invention are those having the following composition:
- heterophasic copolymer of propylene and ethylene [containing 35% PPr and 65% COPO], 50%; oil, 24%; talcum, 25%; master batch, 1%.
- heterophasic copolymer of propylene and ethylene [containing 35% PPr and 65% COPO], 31%; PPr, 18%; oil, 31 %; talcum, 19%; master batch, 1%.
- PPr, 37%; EPR rubber, 25%; oil, 17%; talcum, 20%; master batch, 1%.
- PPi, 26%; EPR rubber, 26%; oil, 33%; talcum, 14%; master batch, 1%.
- PPr, 25%; ENGAGE, 30%; talcum, 23%; oil, 22%; master batch, 1%.

The polymeric material and corresponding products according to the invention may be obtained according to known techniques. In particular, the three components a, b and c may be mechanically mixed in a Banbury mixer, operating at a temperature of between 160°C and 190°C.

Alternatively, the polymers, filler or fillers, additives and oil are fed into an extruder that performs homogeneous mixing of the components at 190°C.

It is also possible to allow the oil to be absorbed on the solid amorphous components by operating in mixing conditions at a temperature of 60-80°C for approximately one hour, and then feed all the components into an extruder.

The products are obtained by processing the polymeric materials according to known techniques, such as extrusion, moulding or rolling.

Preferably, the products are made in the shape of sheets.

For the purposes of the present invention, the term 'sheets' used in the description and in the claims is intended in its widest acceptation, to include all those products having a wide surface, either plane or undulated, regular or irregular, that is suitable for protecting and/or waterproofing an underlying or overlying structure.

The thickness of the sheet may vary within a wide range, according to the conditions of use. As an indication, the sheets manufactured according to the invention may have thickness of between 0.5 and 5 mm, preferably 2 mm.

The sheets according to the present invention may further contain within them mesh structures made of different materials, such as fabric, non-woven fabric, glass or polyester mesh, or other materials.

A further aspect of the present invention regards a process for the reduction of the melting point of a composite polymeric material containing the components a and b referred to above, possibly in the presence of a filler or fillers, anti-oxidants, UV-protectors, dyes, and stabilizers, so that a high-weldability material is obtained, characterized in that an oil (component c) that is a solvent of the components b is added to the mixture (a + b).

The composite polymeric material according to the invention finds application in all those sectors where the use of polymeric materials that are easily weldable at a low temperature and present good and uniform resistance and plasticity is required.

A feature of the invention consists in the use of the polymeric material as described above in the form of a product for the insulation and waterproofing of building structures. For instance, the sheets may be used for the insulation/waterproofing of roofings, foundations, bridges, roads with draining asphalts, gutters and offlets, water tanks, tunnels and subways, terraces, roof gardens and swimming-pools.

In the application phase, these sheets are welded together or fastened to a substrate by means of heating, for example using hot air or a hot blade.

The reduced melting point makes it possible to perform welding in a short time and/or with less heating, hence with a lower thermal alteration of the polymeric material subjected to welding and a lower expenditure of energy.

The reduced heating also involves the reduction of fumes, thus increasing environmental hygiene and the safety of the persons doing the job.

The welds so performed are mechanically resistant; i.e., they present tensile strength of the order of, or higher than, that of materials used for the manufacture of waterproofing sheets.

The invention will be now described through the examples that follow.

### EXPERIMENTAL PART

### Products used in the experimentation

PPi : isotactic polypropylene
PPr : random polypropylene (random copolymer of propylene with ethylene and/or other olefins)
EPR : rubber obtained by polymerizing ethylene with propylene
COPO : amorphous copolymer of propylene with ethylene and/or other alpha olefins obtained during the production of heterophasic propylene copolymers (cf. Hydrocarbon Processing, Nov. 1984, p.113).
HETEROPHASIC PROPYLENE COPOLYMERS : propylene copolymers in which the phase soluble in xylene (non-crystalline) consists of COPO, and the insoluble (crystalline) part basically consists of isotactic or random polypropylene.
ENGAGE : amorphous copolymer of ethylene with octene-1.

### Products used in the experimentation

**TABLE A**

| **Letter** | **Trade Name** | **Manufacturer** | **Description** |
|---|---|---|---|
| A | Adflex Q100F | Montell | Heterophasic copolymer of C₃ with C₂ |
| B | Moplen S30S | Montell | Isotactic polypropylene |
| C | Moplen EP2S12B | Montell | Random polypropylene with C₂ |
| D | Dutral CO-038 | Enichem Elastomeri | Ethylene-propylene rubber |
| E | Moplen EPT 30R | Montell | Heterophasic copolymer of C₃ with C₂ |
| H | Isorchem | Condea Augusta | Linear dodecylbenzene |
| I | Alchisor PT | Condea Augusta | Mixture of mixed-structure dialkylbenzene diphenylalkanes |
| L | Nappar | Exxon Chemical | Naphthenic oil |
| M | Norpar | Exxon Chemical | Paraffin oil |
| N | CM3 | IMI Fabi S.r.l. | Talcum |
| O | ENGAGE | Du Pont Dow Elastomer | Amorphous copolymer of ethylene with octene-1 |
| A) Adflex Q100F (manufacturer, Montell) M.F.R. (ASTM 1238"L") = 0.6 g/10'; a heterophasic propylene-ethylene copolymer. The amorphous/elastomeric phase (COPO), soluble in xylene, represents 65% and has an intrinsic viscosity of 3 dl/g; the crystalline phase (35%) prevalently consists of random polyropylene (PPr). | | | |
| B) Moplen S30S (manufacturer, Montell) M.F.R. (ASTM 1238"L") = 1.8 g/10'; isotactic polypropylene (PPi); solubility in xylene, 4.2% | | | |
| C) Moplen EP2S12B (manufacturer, Montell) M.F.R. (ASTM 1238"L") = 1.8 g/10'; random polypropylene with ethylene; solubility in xylene, 5% | | | |
| D) Dutral CO-038 (manufacturer, Enichem Elastomeri); propylene-ethylene rubber with Mooney ML viscosity (1+4) at 125°C of 60; propylene content, 28%; solubility in xylene, 100% | | | |
| E) Moplen EPT 30R (manufacturer, Montell) M.F.R. (ASTM 1238"L") = 3.5 dg/10'; heterophasic copolymer of propylene with ethylene. The elastomeric phase (COPO), soluble in xylene, accounts for 15%; the crystalline phase (85%) consists of isotactic polypropylene (PPi). | | | |
| H) Isorchem (manufacturer, Condea Augusta): linear dodecylbenzene, i.e., alkylated benzols in one position of the nucleus with prevalence of 12-carbon atom saturated side chains | | | |
| I) Alchisor PT (manufacturer, Condea Augusta): a mixture of dialkylbenzene and mixed-structure diphenylalkanes; by-product from the production of linear dodecylbenzene | | | |
| L) "Nappar 10" naphthenic oil (manufacturer, Exxon Chemical); density (ASTM D 4052), 0.817 kg/dm³ | | | |
| M) "Norpar 15" paraffin oil (manufacturer, Exxon Chemical); density (ASTM D 4052), 0.772 kg/dm³ | | | |
| N) "CM3" talcum (manufacturer, Industria Mineraria Italiana Fabi, S.r.l.) | | | |
| O) ENGAGE 8150 (manufacturer, Du Pont Dow Elastomers): amorphous copolymer of ethylene with octene-1; octene-1 content, 25%; Mooney ML viscosity (1+4) at 121°C, 35; solubility in xylene, 100%. | | | |

The melting point of PPi and its mixtures with COPO (specimen 2) or with EPR rubber (specimen 3) was measured.

The results are given in Table 1. The melting points were measured on a METTLER DSC 30 - TA 3000 at a rate of 10°C/min.

**TABLE I**

| Specimen | Composition (%) | | | Solubility in xylene (%) | mp (°C) |
|---|---|---|---|---|---|
| | B | D | E | | |
| 1 | 100 | - | - | 4 | 161.8 |
| 2 | - | - | 100 | 15 | 160.7 |
| 3 | 50 | 50 | - | 52 | 156.4 |

The mixtures obtained presented a limited reduction in melting point. This occurred also in the case of specimen 3, where up to 50% of PPi was replaced with EPR rubber.

In the case of mixtures of random polyropylene with COPO, EPR rubber (Table II) or ENGAGE, the melting point remained altogether unvaried for all the specimens with a different mixing percentage, even in the case in which 82.5% of the random polyropylene was replaced by the amorphous component (specimen 9).

**TABLE II**

| Specimen | Composition (%) | | | | Solubility in xylene (%) | mp (°C) |
|---|---|---|---|---|---|---|
| | A | C | D | O | | |
| 4 | - | 100 | - | - | 5 | 145.9 |
| 5 | 62.5 | 37.5 | - | - | 42.5 | 145.1 |
| 6 | 72.7 | 27.3 | - | - | 48.6 | 144.9 |
| 7 | 100 | - | - | - | 65 | 144.9 |
| 8 | 75 | - | 25 | - | 73.7 | 143.9 |
| 9 | 50 | - | 50 | - | 82.5 | 144.8 |
| 30 | - | 46 | - | 54 | 56.3 | 145 |

We shall now consider the behaviour of ternary mixtures consisting of crystalline polymers, amorphous polymers and oils.

In the case of PPi-EPR mixtures, if the ratio between PPi and EPR is kept constant at a value of 0.92, as the oil content is varied, the following pattern is found:

**TABLE III**

| Specimen | Composition (%) | | | Solubility in xylene (%) | mp (°C) |
|---|---|---|---|---|---|
| | B | D | M | | |
| 3 | 50 | 50 | - | 52 | 156.4 |
| 18 | 40 | 40 | 20 | 61.6 | 152.4 |
| 19 | 30 | 30 | 40 | 71.2 | 148.6 |

Likewise, Table IV shows the behaviour of the melting point in the case of mixtures having a PPr:COPO ratio of 0.54, as the oil content is varied.

**TABLE IV**

| Specimen | Composition (%) | | Solubility in xylene (%) | mp (°C) |
|---|---|---|---|---|
| | A | I | | |
| 7 | 100 | - | 65 | 144.9 |
| 20 | 83.3 | 16.7 | 70.8 | 138.0 |
| 21 | 66.7 | 33.3 | 76.7 | 131.9 |
| 22 | 30 | 70 | 89.5 | 118.4 |
| 23 | 30 | 70 | 89.5 | 121.4 |
| 24 | 15 | 85 | 94.75 | 113.4 |
| 25 | 10 | 90 | 96.5 | 116.4 |

Similar results were obtained by mixing Adflex (PPr + COPO), PPr and oil, maintaining the PPr:COPO ratio constant at 1.06 (see Table V).

**TABLE V**

| Specimen | Composition (%) | | | Solubility in xylene (%) | mp (°C) |
|---|---|---|---|---|---|
| | A | C | I | | |
| 6 | 72.7 | 27.3 | - | 48.6 | 144.9 |
| 26 | 53.3 | 20 | 26.7 | 62.34 | 136.4 |
| 27 | 44 | 16.5 | 39.5 | 68.9 | 132.8 |

Similar results were obtained by mixing Adflex (PPr + COPO), PPr and oil, maintaining the PPr:COPO ratio constant at 1.35 (see Table VI).

**TABLE VI**

| Specimen | Composition (%) | | | Solubility in xylene (%) | mp (°C) |
|---|---|---|---|---|---|
| | A | C | L | | |
| 5 | 62.5 | 37.5 | - | 42.5 | 145.1 |
| 28 | 50 | 30 | 20 | 54 | 140 |
| 29 | 25 | 15 | 60 | 77 | 127.3 |

Similar results were also obtained by mixing PPr with ENGAGE and oil.

**TABLE VII**

| Specimen | Composition (%) | | | Solubility in xylene (%) | mp (°C) |
|---|---|---|---|---|---|
| | C | O | H | | |
| 30 | 46 | 54 | - | 56.3 | 144.5 |
| 31 | 33 | 38 | 29 | 68.65 | 139 |
| 32 | 26 | 31 | 43 | 75.3 | 135 |

From the set of data given above it may be noted that, given the same non-crystalline total phase (phase soluble in xylene), the melting point drops much more noticeably if this phase contains an oil according to the present invention.

This greater effect on the melting point makes it possible to obtain polymeric composite materials with low melting point, and hence ones that are weldable at a low temperature, but contain significant proportions of crystalline phase.

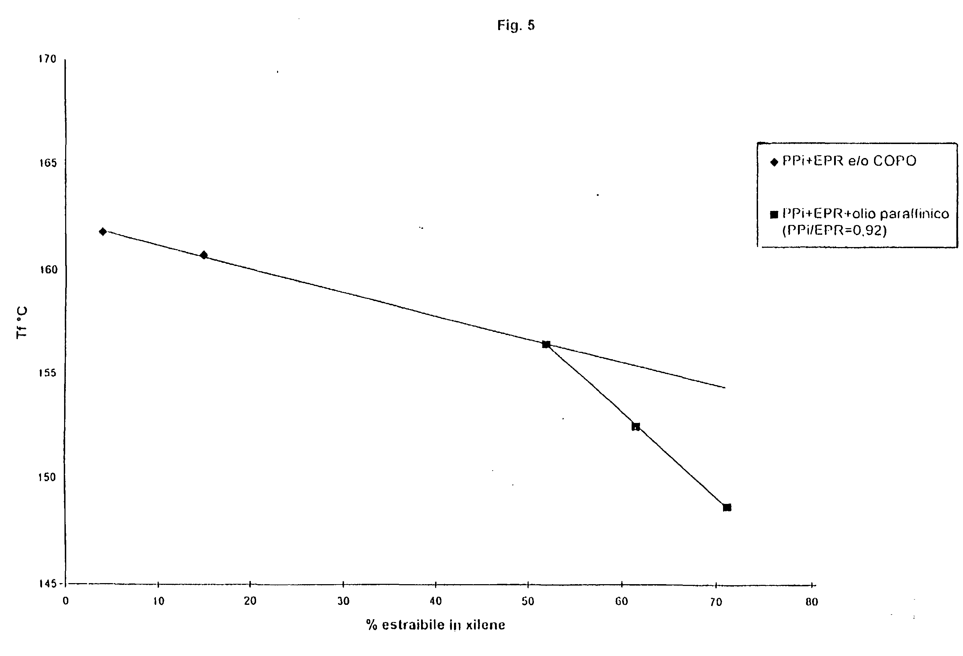

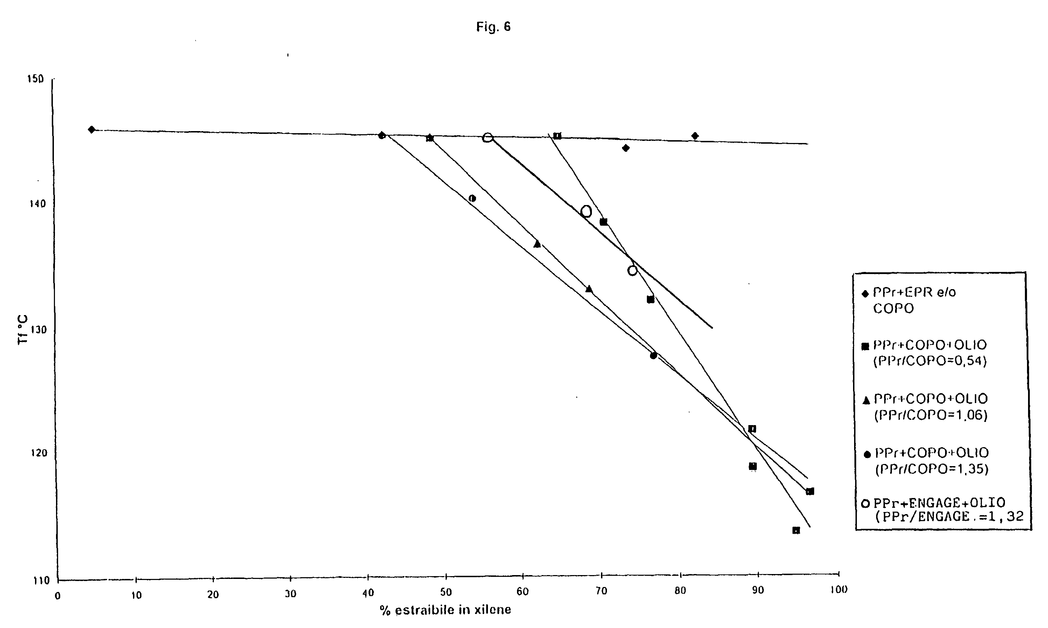

The data thus obtained are presented in diagram form in Figures 4-6. It may noted that, given the same amorphous phase (phase soluble in xylene), the melting point drops much faster if a part of the COPO-EPR mixture is replaced with oil.

### Morphological examination

The applicant has found that the morphological structure of the ternary mixtures according to the invention is different from that of the binary mixtures (PPi and/or PPr + EPR and/or COPO).

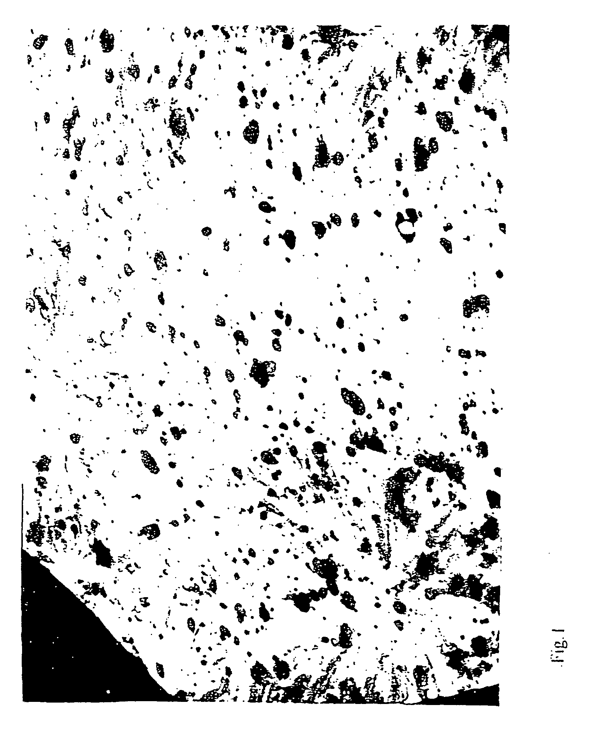

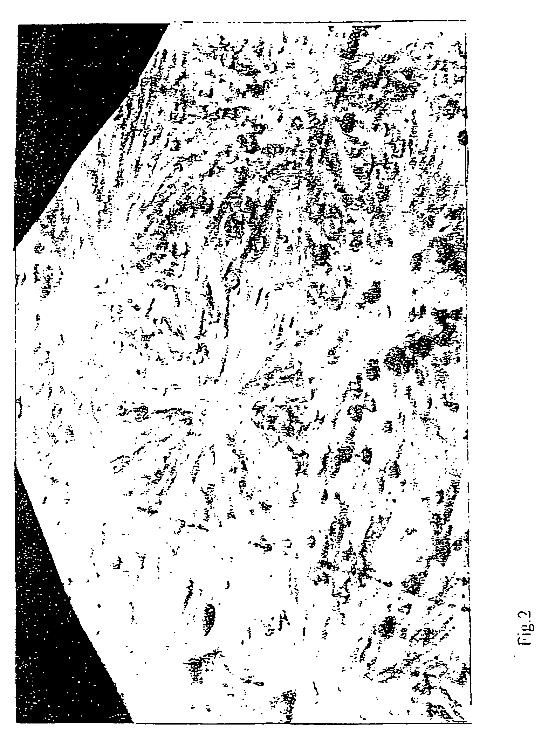

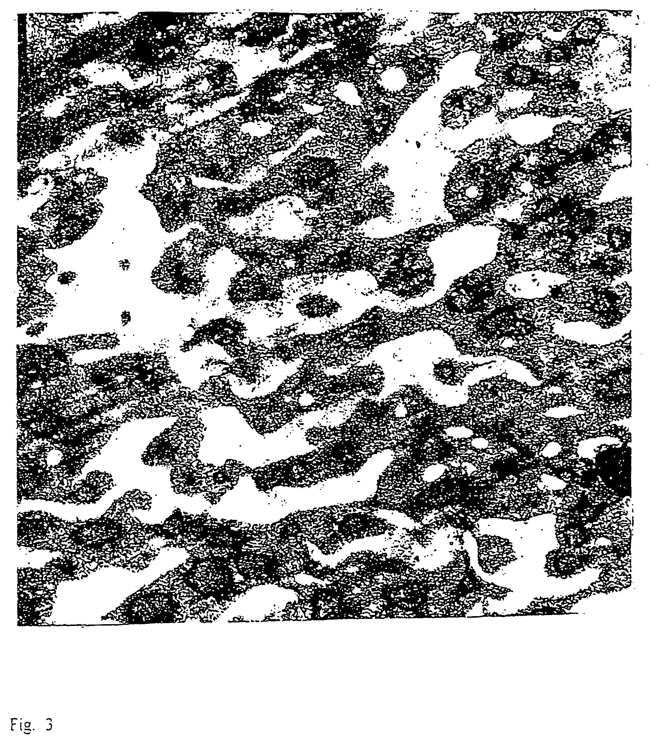

More precisely, it is known that, if a product obtained from a mixture of PPi (80%) with EPR (20%) is observed at the electron microscope, the product that is derived is basically a very fine dispersion of one polymer in the other. In fact, two phases may be noted: one discontinuous phase (EPR) of spherical particles dispersed in a second, continuous, phase (PPi) [Figs 1 and 2].

If relatively modest amounts of PPi are mixed with an EPR rubber, one elastomeric continuous phase and one polypropylene dispersed phase are obtained.

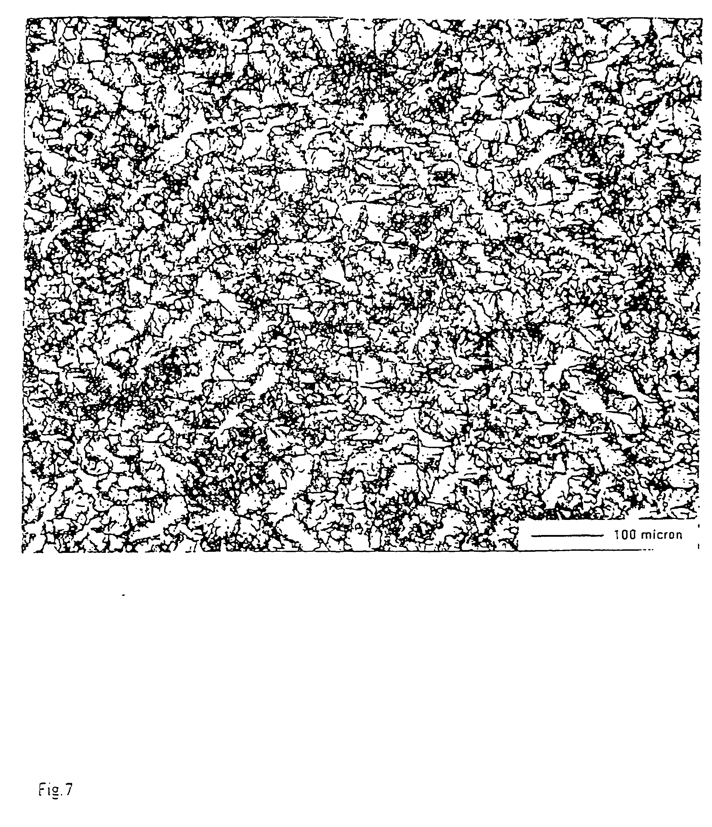

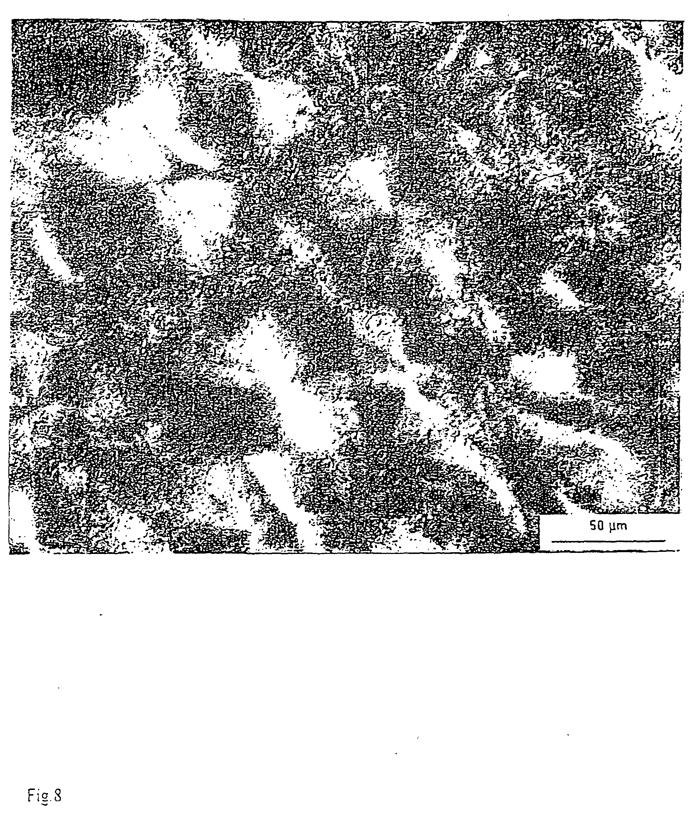

On the other hand a ternary mixture according to the present invention, made up of 50% Adflex Q100F and 50% Alchisor PT (17.5% PPr, 32.5% COPO, and 50% oil), examined at the optical microscope, presents: in polarized light, the typical spherulitic structure of propylene (Fig. 7); in interference contrast, a dispersed phase with particles having a diameter of 1-1.25 micron (Fig. 8).

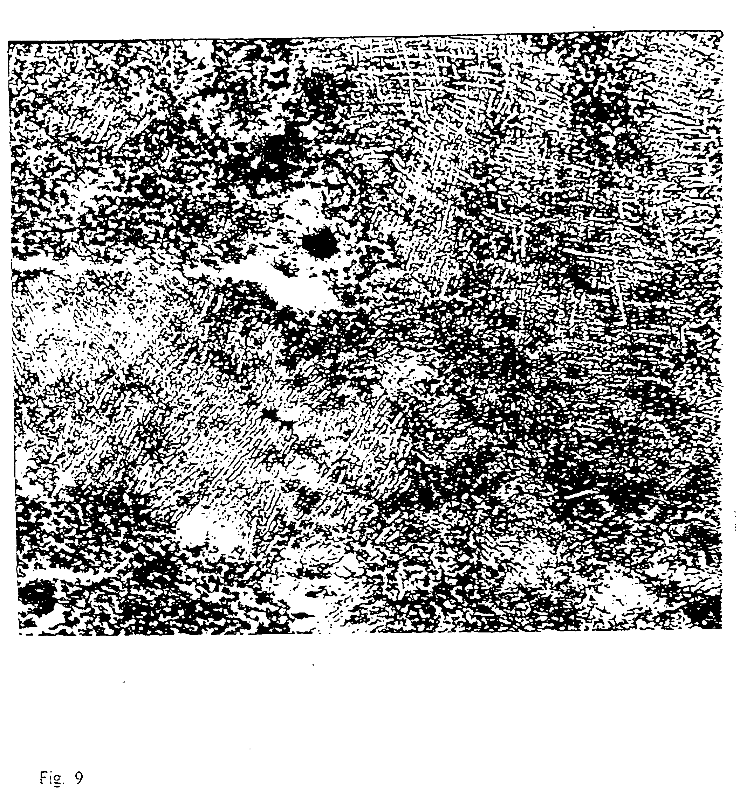

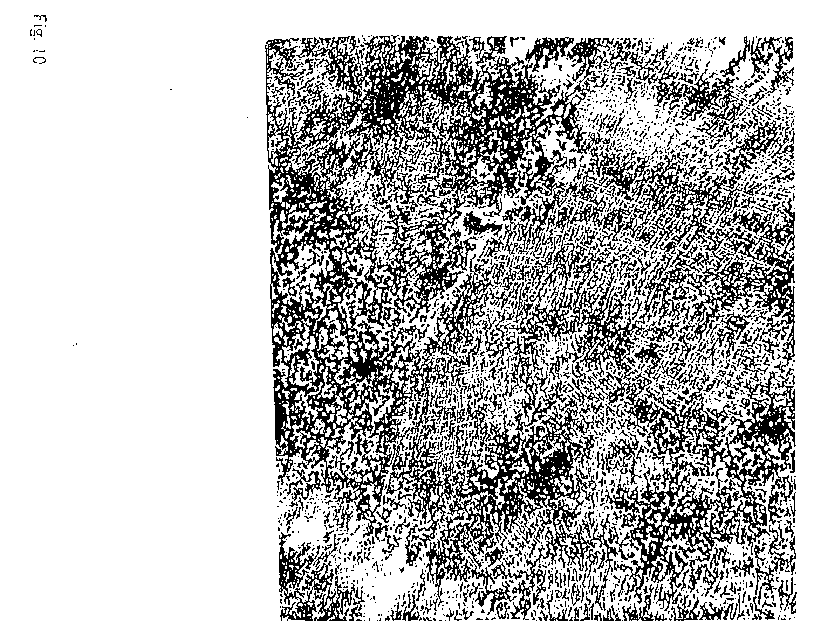

An examination (Figs. 9 and 10) at the transmission electron microscope (T.E.M.) with contrast by immersion of the specimen in an RuO₄ aqueous solution and sectioned using freezing ultramicrotomy, reveals a crossed-lamellar structure with lamellae of thickness lower than 100 Angstrom and a phase made up of micro-particles of dimensions comparable to the dispersed phase of Fig. 8.

The micro-particles have non-defined boundaries which penetrate also into the semi-crystalline structure. It is an example of phase interpenetration, i.e., where there is no clear delimitation of the amorphous and crystalline phases, but one phase penetrates into the other phase.

It is believed that this different structure is responsible for the different behaviour as regard melting point, and consequently weldability at low temperature, of the new materials described.

The following examples present compositions of sheets obtained by extrusion, as well as their main characteristics.

### EXAMPLE 1

To 5000 g of Adflex Q100F were added 2400 g of Alchisor PT. The mixture was heated up to 70°C and kept at this temperature for one hour under stirring. The Alchisor was completely absorbed by the Adflex Q100F. The granules thus obtained, together with 2500 g of talcum and 100 g of master batch containing UV-protectors and anti-oxidants, were fed into an extruder which, working at a temperature of 180-190°C, produced a sheet having a thickness of 2 mm. The sheet was flexible, elastic and easy to weld. The melting point of the material obtained, measured using a METTLER DSC 30 - TA 3000, rate 10°C/min, was 132°C.

The welding was carried out with hot air, using a VARIANT PLUS automatic welder with automatic carriage, manufactured by the firm LEISTER, at a rate of 8 m/min and at a temperature of 350°C.

### EXAMPLE 2

The following were fed into the mouth of a counter-rotating double-screw extruder: Adflex Q100F (at a rate of 3100 g/min), Moplen EP2S12B (at a rate of 1800 g/min), talcum (at a rate of 1900 g/min), and a master batch containing antioxidants, UV-protectors and dyes (at a rate of 100 g/min).

At approximately one half of the height of the extruder, Nappar 10 was fed in through a pump at a rate of 3100 g/min. Working at a temperature of 190°C, the extruder produced a 2-mm thick sheet.

The sheet produced was flexible and elastic and could be welded in the same conditions as those described in Example 1.

The melting point was found to be 134°C.

### EXAMPLE 3

The following were fed into a Banbury mixer: 3700 g of Moplen EP2S12B; 2500 g of Dutral CO-038; 2000 g of talcum CM3; and 100 g of master batch containing anti-oxidants and UV-protectors. The mixture was brought up to a temperature of 190°C and, once the material was melted, 1700 g of Alchisor PT were added, and mixing was continued for 10 minutes. The material thus obtained was extruded at 190°C to produce 2-mm thick sheets. The sheets were welded as described in Example 1, at a temperature of 390°C, and at a rate of 8m/min. The melting point was found to be 137°C.

### EXAMPLE 4

Using the technique described in Example 3, 2600 g of Moplen S30S, 2600 g of Dutral CO-038. 1400 g of talcum CM3, 100 of a master batch containing stabilizers and anti-oxidants, and 3000 g of Alchisor PT were mixed to form a 1.5-mm thick sheet that could be welded at 420°C and at a rate of 7 m/min. The melting point was found to be 148°C.

The tensile strength of the sheets welded together that had been produced according to any of the Examples from 1 to 5 proved to be in compliance with the standards required for waterproofing sheets, and in some cases higher than that of known products already in use in the sector.

### EXAMPLE 5

Using the technique described in Example 3 the following were mixed in Banbury mixer: 2500 g of Moplen EP2S12B; 3000 g of ENGAGE 8150; 2300 g of talcum; 2200 g of Alchisor PT; and 100 g of master batch containing anti-oxidants and UV-protectors. Subsequently, the material was extruded to form 2-mm thick sheets. The sheets were welded as described in Example 1 at a rate of 8 m/min and at a temperature of 380°C. The melting point was found to be 136°C.

### LIST OF FIGURES

1) Morphology at T.E.M. microscope (3000x) of a mechanical mixture of PPi (80%) and EPR (20%)
2) Morphology at T.E.M. (3000x) of a mixture obtained by reaction of PPi (80%) and COPO (20%)
3) Morphology at T.E.M. (18750x) of a propylene heterophasic copolymer with high extractable value (65%) in xylene. Contrast by immersion in RuO₄ aqueous solution.
4) Diagram of melting point as a function of the extractable percentage in xylene of mixtures of PPi or PPr with propylene amorphous polymers or copolymers.
5) Diagram of melting point as a function of the extractable percentage in xylene of the mixtures of PPi with EPR and/or COPO, and PPi with EPR and with oil.
6) Diagram of melting point as a function of the extractable percentage in xylene of the mixtures of PPr with COPO and/or EPR; PPr with COPO and oil; PPR with ENGAGE and oil.
7) Morphology at optical microscope in polarized light of a mixture of Adflex Q100F (50%) and Alchisor PT (50%)
8) Morphology at optical microscope in interference contrast of a mixture of Adflex Q100F (50%) and Alchisor PT (50%)
9) Morphology at T.E.M. (90000x) of a mixture of Adflex Q100F (50%) and Alchisor PT (50%). Contrast by immersion in RuO₄ aqueous solution; sectioned via freezing ultramicrotomy.
10) Morphology at T.E.M. (70000x) of a mixture of Adflex Q100F (50%) and Alchisor PT (50%). Contrast by immersion in RuO₄ aqueous solution; sectioned via freezing ultramicrotomy.

## Claims

1. Composite polymeric material having low-temperature weldability, consisting of:
a. one or more polymers of a crystalline nature chosen from among isotactic polypropylene, random polypropylene and their mixtures;
b. one or more amorphous polymers chosen from among an ethylene-propylene copolymer (EPR rubber), a copolymer of propylene with ethylene and/or other alpha-olefins (COPO), a copolymer of ethylene with octene-1 (ENGAGE) and/or other alpha olefins and their mixtures;
c. an oil which is a solvent of the components b having a boiling point higher than the processing temperature, and possibly suitable fillers, anti-oxidants, UV-protectors, dyes, and stabilizers.

2. Material according to Claim 1, consisting of:
- 15-60 wt% of component a
- 5-80 wt% of component b
- 5-60 wt% of component c.

3. Material according to Claim 1, consisting of:
- 15-40 wt% of component a
- 10-70 wt% of component b
- 15-45 wt% of component c.

4. Material according to Claim 1, consisting of:
- 15-40 wt% of component a
- 20-50 wt% of component b
- 20-40 wt% of component c.

5. Material according to any one of Claims 1-4, in which the oil (component c) is chosen from among naphthenic oil, paraffin oil, linear dodecylbenzene, dialkylbenzenes, diphenylalkanes, or their mixtures.

6. An insulating and/or waterproofing product which may be welded at a low temperature, containing a composite polymeric material consisting of:
a, one or more polymers of a crystalline nature chosen from among isotactic polypropylene, random polypropylene and their mixtures;
b. one or more amorphous polymers chosen from among an ethylene-propylene copolymer (EPR rubber), a copolymer of propylene with ethylene and/or other alpha-olefins (COPO), a copolymer of ethylene with octene-1 (ENGAGE) and/or other alpha olefins and their mixtures;
c. an oil which is a solvent of the components b having a boiling point higher than the processing temperature, and possibly suitable fillers, anti-oxidants, UV-protectors, dyes, and stabilizers.

7. Product according to Claim 6, In which the said composite material is made up as follows:
- 15-60 wt% of component a
- 5-80 wt% of component b
- 5-60 wt% of component c.

8. Product according to Claim 6, in which the said composite material is made up as follows:
- 15-40 wt% of component a
- 10-70 wt% of component b
- 15-45 wt% of component c.

9. Product according to Claim 6, in which the said composite material is made up as follows:
- 15-40 wt% of component a
- 20-50 wt% of component b
- 20-40 wt% of component c.

10. Product according to any one of Claims 6-9, in which the oil (component c) is chosen from among naphthenic oil, paraffin oil, linear dodecylbenzene, dialkylbenzenes, diphenylalkanes, or their mixtures.

11. Product according to any one of Claims 6-10, containing a filler or fillers in a proportion of from 10 wt% to 30 wt% with respect to the weight of the product; and containing a master batch of anti-oxidants, UV-protectors, and dyes, in a proportion of approximately 1 wt% with respect to the weight of the product.

12. Product according to any one of Claims 6-11, having the following composition: heterophasic copolymer of propylene and ethylene [containing 35% PPr and 65% COPO], 50%; oil, 24%; talcum, 25%; master batch, 1%.

13. Product according to any one of Claims 6-11, having the following composition: heterophasic copolymer of propylene and ethylene [containing 35% PPr and 65% COPO], 31%; PPr, 18%; oil, 31%; talcum, 19%; master batch, 1%.

14. Product according to any one of Claims 6-11, having the following composition: PPr, 37%; EPR rubber, 25%; oil, 17%; talcum, 20%; master batch, 1%.

15. Product according to any one of Claims 6-11, having the following composition: PPi, 26%; EPR rubber, 26%; oil, 33%; talcum, 14%; master batch, 1%.

16. Product according to any one of Claims 6-11, having the following composition: PPr, 25%; ENGAGE, 30%; talcum, 23%; oil, 22%; master batch, 1%.

17. Product according to any one of Claims 6-16, formed in the shape of an insulation and/or waterproofing sheet.

18. Use of a product as described in Claims 6-17 for insulation and/or waterproofing of building structures.

## Patentansprüche

1. Polymer-Kompositmaterial mit Niedertemperatur-Schweißbarkeit, weiches besteht aus:
a) einem oder mehreren Polymeren kristalliner Natur, ausgewählt aus isotaktischem Polypropylen, statistischem Polypropylen und ihren Gemischen;
b) einem oder mehreren amorphen Polymeren, ausgewählt aus einem Ethylen-Propylen-Copolymer (EPR-Kautschuk), einem Propylen-Copolymer mit Ethylen und/oder anderen Alpha-Olefinen (COPO), einem Ethylen-Copolymer mit Okten-1 (ENGAGE) und/oder anderen Alpha-Olefinen und ihren Gemischen;
c) einem Öl, welches ein Lösungsmittel für die Bestandteile b) ist und einen Siedepunkt hat, der höher liegt als die Verfahrenstemperatur, und möglicherweise geeigneten Füllstoffen, Oxidationshemmern, UV-Schutzstoffen, Farbstoffen und Stabilisatoren.

2. Polymer-Kompositmaterial nach Anspruch 1, bestehend aus:
- 15 - 60 Gew.-% Bestandteil a
- 5 - 80 Gew.-% Bestandteil b
- 5 - 60 Gew.-% Bestandteil c.

3. Polymer-Kompositmaterial nach Anspruch 1, bestehend aus:
- 15 - 40 Gew.-% Bestandteil a
- 10 - 70 Gew.-% Bestandteil b
- 15 - 45 Gew.-% Bestandteil c.

4. Polymer-Kompositmaterial nach Anspruch 1, bestehend aus:
- 15 - 40 Gew.-% Bestandteil a
- 20 - 50 Gew.-% Bestandteil b
- 20 - 40 Gew.-% Bestandteil c.

5. Polymer-Kompositmaterial nach einem der Ansprüche 1 - 4, bei welchem das Öl (Bestandteil c) aus naphthenischem Öl, Paraffinöl, linearem Dodecylbenzol, Dialkylbenzolen, Diphenylalkanen oder ihren Gemischen gewählt wird.

6. Isolierendes und/oder wasserdichtes Produkt, welches bei niedriger Temperatur geschweißt werden kann und ein Polymer-Kompositmaterial enthält, welches besteht aus:
a) einem oder mehreren Polymeren kristalliner Natur, ausgewählt aus isotaktischem Polypropylen, statistischem Polypropylen und ihren Gemischen;
b) einem oder mehreren amorphen Polymeren, ausgewählt aus einem Ethylen-Propylen-Copolymer (EPR-Kautschuk), einem Propylen-Copolymer mit Ethylen und/oder anderen Alpha-Olefinen (COPO), einem Ethylen-Copolymer mit Okten-1 (ENGAGE) und/oder anderen Alpha-Olefinen und ihren Gemischen;
c) einem Ol, welches ein Lösungsmittel für die Bestandteile b) ist und einen Siedepunkt hat, der höher liegt als die Verfahrenstemperatur, und möglicherweise geeigneten Füllstoffen, Oxidationshemmern, UV-Schutzstoffen, Farbstoffen und Stabilisatoren.

7. Produkt,nach Anspruch 6, bei denen das genannte Kompositmaterial wie folgt zusammengesetzt ist:
- 15 - 60 Gew.-% Bestandteil a
- 5 - 80 Gew.-% Bestandteil b
- 5 - 60 Gew.-% Bestandteil c.

8. Produkt,nach Anspruch 6, bei denen das genannte Kompositmaterial wie folgt zusammengesetzt ist:
- 15 - 40 Gew.-% Bestandteil a
- 10 - 70 Gew.-% Bestandteil b
- 15 - 45 Gew.-% Bestandteil c.

9. Produkt,nach Anspruch 6, bei denen das genannte Kompositmaterial wie folgt zusammengesetzt ist:
- 15 - 40 Gew.-% Bestandteil a
- 20 - 50 Gew.-% Bestandteil b
- 20 - 40 Gew.-% Bestandteil c.

10. Produkt,nach einem der Ansprüche 6 bis 9, bei welchem das Öl (Bestandteil c) aus naphthenischem Öl, Paraffinöl, linearem Dodecylbenzol, Dialkylbenzolnen, Diphenylalkanen oder ihren Gemischen gewählt wird.

11. Produkt,nach einem der Ansprüche 6 bis 10, welches einen Füllstoff oder Füllstoffe in einem Verhältnis von 10 Gew.-% bis 30 Gew.-%, bezogen auf das Gewicht des Erzeugnisses, enthält und welches ein Grundgemisch aus Oxidationshemmern, UV-Schutzstoffen und Farbstoffen in einem Anteil von annähernd 1 Gew.-%, bezogen auf das Gewicht des Erzeugnisses, enthält.

12. Produkt,nach einem der Ansprüche 6 bis 11, welches die folgende Zusammensetzung aufweist: heterophasisches Propylen- und Ethylen-Copolymer (enthaltend 35 % PPr und 65 % COPO) zu 50 %, Öl zu 24 %, Talkum zu 25 %, Grundgemisch zu 1 %.

13. Produkt,nach einem der Ansprüche 6 - 11, welches die folgende Zusammensetzung aufweist: heterophasisches Propylen- und Ethylen-Copolymer (enthaltend 35 % PPr und 65 % COPO) zu 31 %, PPr zu 18 %, Öl zu 31 %, Talkum zu 19 %, Grundgemisch zu 1 %.

14. Produkt,nach einem der Ansprüche 6 bis 11, welches die folgende Zusammensetzung aufweist: PPr zu 37 %, EPR-Kautschuk zu 25 %, Öl zu 17 %, Talkum zu 20 %, Grundgemisch zu 1 %.

15. Produkt,nach einem der Ansprüche 6 bis 11, welches die folgende Zusammensetzung aufweist: PPi zu 26 %, EPR-Kautschuk zu 26 %, Öl zu 33 %, Talkum zu 14 %, Grundgemisch zu 1 %.

16. Produkt,nach einem der Ansprüche 6 bis 11, welches die folgende Zusammensetzung aufweist: PPr zu 25 %, ENGAGE zu 30 %, Talkum zu 23 %, Öl zu 22 %, Grundgemisch zu 1 %.

17. Produkt,nach einem der Ansprüche 6 bis 16, welches in Gestalt einer Isolier und/oder Wasserabdichtbahn ausgebildet ist.

18. Einsatz eines Produktes gemäß den Ansprüchen 6 bis 17, zum Isolieren und zur Wasserabdichtung von Bauwerken.

## Revendications

1. Une matière polymère composite présentant une soudabilité de basse température, se composant de :
a. un ou plusieurs polymères de nature cristalline choisis parmi le polypropylène isotactique, le polypropylène aléatoire et leurs mélanges;
b. un ou plusieurs polymères amorphes choisis parmi un copolymère d'éthylène-propylène (caoutchouc EPR), un copolymère de propylène avec de l'éthylène et/ou une autre alpha-oléfine (COPO), un copolymère d'éthylène avec de l'octène-1 (ENGAGE) et/ou d'autres alpha-oléfines et leurs mélanges;
c. une huile qui est un solvant des composés (b), présentant un point d'ébullition supérieur à la température de traitement et, éventuellement, des charges, des antioxydants, des protecteurs d'UV, des colorants et des stabilisants, de type approprié.

2. Matière selon la revendication 1 se composant de :
- 15 à 60 % en poids de composé a
- 5 à 80 % en poids de composé b
- 5 à 60 % en poids de composé c.

3. Matière selon la revendication 1, se composant de :
- 15 à 40 % en poids de composé a
- 10 à 70 % de composé b
- 15 à 45 % en poids de composé c.

4. Matière selon la revendication 1, se composant de :
- 15 à 40 % en poids de composé a
- 20 à 50 % en poids de composé b
- 20 à 40 % en poids de composé c.

5. Matière selon l'une quelconque des revendications 1 à 4, dans laquelle l'huile (composé c) est choisie parmi l'huile naphténique , l'huile de paraffine, le dodécylbenzène linéaire, les dialkylbenzènes, les diphénylalcanes, ou leurs mélanges.

6. Un produit isolant et /ou imperméable qui peut être soudé à une température basse, contenant une matière polymère composite se composant de :
a. un ou plusieurs polymères d'une nature cristalline choisis parmi le polypropylène isotactique, le polypropylène aléatoire et leurs mélanges;
b. un ou plusieurs polymères amorphes choisis parmi un copolymère d'éthylène-propylène (caoutchouc EPR), un copolymère de propylène avec de l'éthylène et/ou d'autres alpha-oléfines (COPO), un copolymère d'éthylène avec de l'octène-1 (ENGAGE) et/ou d'autres alpha-oléfines et leurs mélanges;
c. une huile qui est un solvant des composés b, présentant un point d'ébullition supérieur à la température de traitement et, éventuellement, des charges, des antioxydants, des protecteurs d'UV, des colorants et des stabilisants, de type approprié.

7. Produit selon la revendication 6, dans lequel ladite matière composite est constituée comme suit :
- 15 à 60 % en poids de composé a
- 5 à 80 % en poids de composé b
- 5 à 60 % en poids de composé c.

8. Produit selon la revendication 6, dans lequel ladite matière composite est constituée comme suit :
- 15 à 40 % en poids de composé a
- 10 à 70 % en poids de composé b
- 15 à 45 % en poids de composé c.

9. Produit selon la revendication 6, dans lequel ladite matière composite est constituée comme suit :
- 15 à 40 % en poids de composé a
- 20 à 50 % en poids de composé b
- 20 à 40 % en poids de composé c.

10. Produit selon l'une quelconque des revendications 6 à 9, dans lequel l'huile (composé c) est choisie parmi l'huile naphténique, l'huile de paraffine, le dodécylbenzène linéaire, les dialkylbenzènes, les diphénylalcanes, ou leurs mélanges.

11. Produit selon l'une quelconque des revendications 6 à 10, contenant une ou des charges dans une proportion allant de 10 % en poids à 30 % en poids relativement au poids du produit; et contenant un mélange mère d'antioxydants, de protecteurs d'UV et de colorants, dans une proportion d'approximativement 1 % en poids relativement au poids du produit.

12. Produit selon l'une quelconque des revendications 6 à 11, ayant la composition suivante : copolymère hétérophasique de propylène et d'éthylène [contenant 35 % de PPr et 65 % de COPO], 50 %; huile, 24 %; talc, 25 %; mélange mère, 1%

13. Produit selon l'une quelconque des revendications 6 à 11, ayant la composition suivante : copolymère hétérophasique de propylène et d'éthylène [contenant 35 % de PPr et 65 % de COPO], 31 %; PPr, 18 %; huile, 31% ; talc, 19 %; mélange mère, 1 %.

14. Produit selon l'une quelconque des revendications 6 à 11, ayant la composition suivante : PPr, 37 %; caoutchouc EPR, 25 %; huile, 17 %; talc, 20 %; mélange mère, 1 %.

15. Produit selon l'une quelconque des revendications 6 à 11, ayant la composition suivante : PPi, 26 %; caoutchouc EPR, 26 %; huile, 33 %; talc, 14 %; mélange mère, 1 %.

16. Produit selon l'une quelconque des revendications 6 à 11, ayant la composition suivante : PPr, 25 %; ENGAGE, 30 %; talc, 23 %; huile, 22 %; mélange mère, 1 %.

17. Produit selon l'une quelconque des revendications 6 à 16, se présentant sous la forme d'une feuille isolante et /ou imperméable.

18. Utilisation d'un produit tel que décrit aux revendications 6 à 17 pour l'isolation ou l'imperméabilisation de structures de bâtiments.
